(19) **Europäisches Patentamt**

**European Patent Office**

**Office européen des brevets**

(11) Veröffentlichungsnummer: **0 686 781 A2**

## (12) EUROPÄISCHE PATENTANMELDUNG

(21) Anmeldenummer: **95106949.1**

(22) Anmeldetag: **09.05.95**

(51) Int. Cl.⁶: **F16C 13/00**

(30) Priorität: **10.05.94 DE 4416421**

(43) Veröffentlichungstag der Anmeldung:
**13.12.95 Patentblatt 95/50**

(84) Benannte Vertragsstaaten:
**AT BE DE FR GB IT**

(71) Anmelder: **GROSS, Heinz, Dr.-Ing.**
**Ringstrasse 137**
**D-64380 Rossdorf (DE)**

(72) Erfinder: **GROSS, Heinz, Dr.-Ing.**
**Ringstrasse 137**
**D-64380 Rossdorf (DE)**

(74) Vertreter: **Rau, Manfred, Dr. Dipl.-Ing. et al**
**Rau, Schneck & Hübner**
**Patentanwälte**
**Königstrasse 2**
**D-90402 Nürnberg (DE)**

(54) **Rolle zur Unterstützung, Umlenkung oder zum Transport von Materialien**

㊸ Eine Rolle zur Unterstützung, Umlenkung oder zum Transport von Materialien besteht aus einem feststehenden zylindrischen Kern (7), auf dem sich ein ringzylindrischer Mantel (1) befindet, wobei beide durch einen radialen Lagerspalt (2) beabstandet sind. Der Mantel (1) ist ausschließlich auf einem zwischen dem Mantel (1) und dem Kern (7) im Lagerspalt (2) strömenden Fluid reibungsarm drehbar gelagert. Der Kern (7) ist mit Zuführöffnungen (12) versehen, durch die das Fluid in den Lagerspalt (2) einströmt. Weiterhin ist der Kern (7) mit Abströmöffnungen (15) versehen, durch die das Fluid aus dem Lagerspalt (2) in den Kern (7) zurückströmt, wobei das Fluid von den Zuführöffnungen (12) zu den Abströmöffnungen (15) vorwiegend in Umfangsrichtung des Rollenmantels (1) strömt.

Fig 2

Die Erfindung betrifft eine Rolle nach dem Oberbegriff des Anspruches 1.

Aus der DE-A-3 510 104 ist eine derartige Rolle bekannt, deren Mantel ausschließlich auf einem Fluidpolster gelagert ist. Sie eignet sich allerdings nicht zur gleichmäßigen Temperierung einer über die Rolle hinweglaufenden Bahn, da das prinzipiell auch zur Temperierung verwendbare Fluid zwischen Rollenmantel und Rollenkern achsparallel strömt. Bei achsparalleler Strömung des Fluid wird z.B. beim Heizen das heiße Fluid von der Unterseite des kühleren Rollenmantels abgekühlt. Im Verlaufe seines Weges zu den Rollenrändern erniedrigt sich dadurch seine Temperatur. Es ergibt sich damit auf der äußeren Rollenoberfläche zwangsläufig ein Temperaturgefälle von der Mitte zu den beiden Rändern des Rollenmantels. Bei Kühlung der Rolle durch das Fluid tritt der entgegengesetzte Effekt ein. Die Ränder des Rollenmantels besitzen eine höhere Temperatur als dessen Mitte. Ein Temperaturgefälle von der Mitte zu den Rollenrändern oder in umgekehrter Richtung ist unerwünscht, da dies eine ungleichmäßige Aufheizung bzw. Abkühlung einer über den Rollenmantel hinweglaufenden Bahn zur Folge hat. Ein Tempraturgefälle quer über eine Bahn führt zu Längenänderungen der Bahn über ihrer Breite, was zwangsläufig zu Verwerfungen der Bahn führt.

Aus der FR-A-1 256 115 ist eine Rolle bekannt, deren Rollenmantel auf Wälzlagern gelagert ist und die von einem achsparallel strömenden Fluid gekühlt wird. Auch hier kann wegen der achsparallelen Strömung des Fluids zwischen Rollenkern und Rollenmantel keine gleichmäßige Temperatur über der Breite des Rollenmantels erreicht werden.

Wenn dünne Polymerfolien über Rollen umgelenkt werden sollen, so wird für die Rollen zur Aufbringung des hierfür erforderlichen Drehmoments ein eigener Antrieb benötigt, da die Folien derartige Kräfte in aller Regel nicht übertrgen können. Sind mehrere Rollen in Form einer Rollenbahn hintereinander angeordnet, so müssen die Rollen mit zunehmender Abkühlung der Folie immer langsamer laufen, da die Länge der Folie infolge ihrer Abkühlung von Rolle zu Rolle geringer wird. Hierzu ist es bekannt geworden, die Rollen über Turbulatoren anzutreiben. Dabei wird über die Durchflußgeschwindigkeit eines Fluids die jeweils benötigte Geschwindigkeit eingestellt.

Weiterhin ist es bekannt geworden, die Rollen mit ihren Antrieben über eine einstellbare Luftkupplung zu koppeln. Auch hierbei muß ein erheblicher Aufwand zur Synchronisierung der einzelnen Rollen mit dem zu transportierenden Gut getrieben werden.

Der Erfindung liegt die Aufgabe zugrunde, eine Rolle der gattungsgemäßen Art so auszugestalten, daß Verstreckungen oder Verwerfungen der über sie laufenden Folienbahnen vermieden werden können.

Diese Aufgabe wird erfindungsgemäß durch die Merkmale im Kennzeichnungsteil des Anspruches 1 gelöst. Mit den erfindungsgemäßen Rollen können bahnförmige Materialien, wie Folien, beim Transport gleichzeitig gekühlt oder beheizt werden. Die Rollen können dabei unterschiedliche Geschwindigkeiten aufweisen. Sie können bei Bedarf auch von der zu transportierenden Bahn oder von dem als Temperiermedium dienenden Fluid angetrieben werden. Die erfindungsgemäß ausgestalteten Rollen können deshalb auch gegenüber Zugbeanspruchungen empfindliche Materialbahnen transportieren, ohne auf diese größere Kräfte auszuüben, wobei ein Schlupf zwischen Bahn und Rollen nicht auftritt. Somit können auch Kunststoffbahnen, die eine niedrige Doppelbrechung aufweisen, transportiert werden.

Die erfindungsgemäß ausgestaltete Rolle weist keine reibenden Dichtungen auf. Dies wird dadurch ermöglicht, daß der sich auf einem feststehenden Rollenkern drehende Rollenmantel ausschließlich auf einem Fluid gelagert ist. Dazu ist zwischen dem Rollenkern und dem Rollenmantel ein minimaler Lagerspalt ausgebildet, der von dem der Lagerung dienenden Fluid durchströmt wird, bei dem es sich um ein Gas oder eine Flüssigkeit, bevorzugt aber Gas, handelt.

Weitere vorteilhafte Ausgestaltungen ergeben sich aus den Unteransprüchen.

Weitere Merkmale, Einzelheiten und Vorteile der Erfindung ergeben sich aus der nachfolgenden Beschreibung eines Ausführungsbeispiels anhand der Zeichnung. Es zeigt

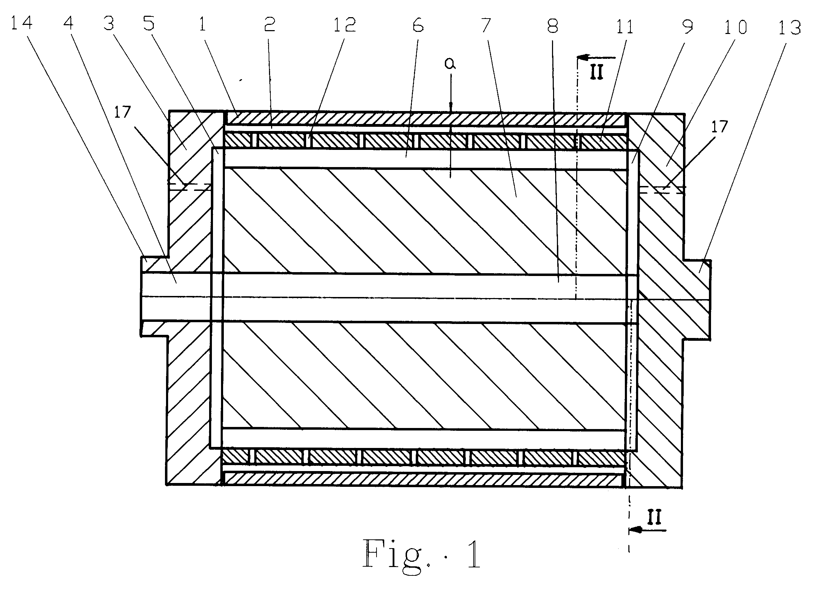

Fig. 1     einen Längsschnitt durch eine Rolle nach der Erfindung entsprechend der Schnittlinie I-I in Fig. 2 und

Fig. 2     einen Querschnitt durch die Rolle entsprechend der Schnittlinie II-II in Fig. 1.

Die in der Zeichnung dargestellte Rolle weist einen Rollenmantel 1 auf, der sich auf einem Lagerspalt 2 frei drehen kann. Ein Fluid, und zwar bevorzugt Gas, wird durch die Mitte einer feststehenden, als Verteilerkappe ausgebildeten Stirnwand 3 eingespeist. Durch die in der Stirnwand 3 ausgebildete Einlaßöffnung 4 gelangt das Fluid über in der Stirnwand 3 ausgebildete, radial verlaufende, als eingefräste Nuten ausgebildete Zuführkanäle 5 in achsparallel verlaufende Verteilerkanäle 6, die in einen mit der Stirnwand 3 durch Verschraubung verbundenen Rollenkern 7 eingefräst sind. Um in den Verteilerkanälen 6 einen über der Breite des Rollenmantels 1 gleichen Druck zu erzeugen bzw. aufrechtzuerhalten, ist der Rollenkern 7 mittig mit einer Bohrung 8 versehen, durch die das Fluid ebenfalls in radial verlaufende Zuführkanäle 9 gelangt, die als Nuten in einer gegenüberliegenden zweiten Stirnwand 10 ausgebildet sind, die ebenfalls als Verteilerkappe wirkt. Durch diese radial verlaufenden Zuführkanäle 9 strömt das Fluid wiederum in die achsparallel verlaufenden Verteilerkanäle 6.

Der Rollenkern 7 ist mit einer aufgeschobenen zylindrischen Hülse 11 versehen. Diese Hülse 11 schließt die Verteilerkanäle 6 zum Lagerspalt 2 hin ab und begrenzt letzteren nach innen. In der Hülse 11 sind im Bereich der Verteilerkanäle 6 als Bohrungen oder Schlitze ausgebildete Zuführöffnungen 12 ausgebildet, die die Verteilerkanäle 6 mit dem Lagerspalt 2 verbinden, durch die also das Fluid in den Lagerspalt 2 gelangt.

An den Stirnwänden 3 und 10 sind Zapfen 13 und 14 vorgesehen, die der Befestigung der Rolle an der jeweiligen Tragvorrichtung bzw. einem entsprechenden Gestell dienen.

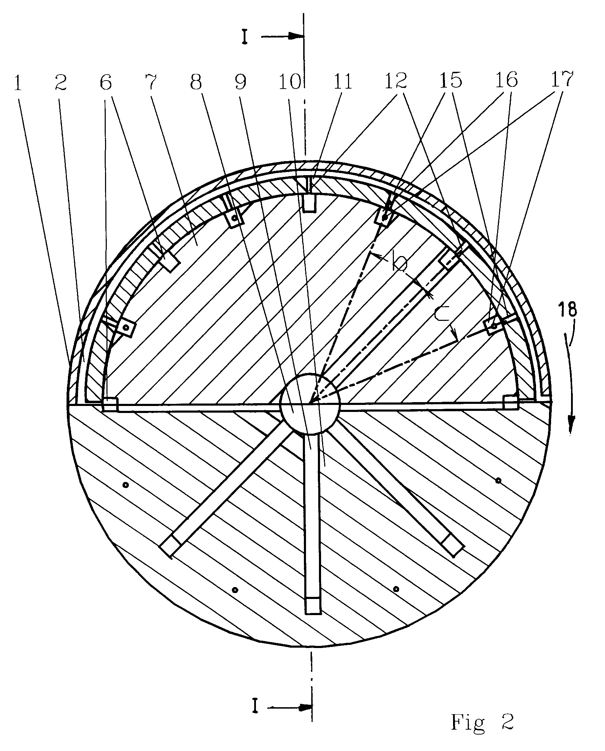

Wie sich insbesondere aus Fig. 2 ergibt, sind am Außenumfang des Rollenkerns 7 achsparallele, als eingefräste Nuten ausgebildete Abströmkanäle 16 vorgesehen, die mittels in der Hülse 11 als Bohrungen oder Schlitze ausgebildeter Abströmöffnungen 15 mit dem Lagerspalt 2 verbunden sind.

In den Stirnwänden 3 und 10 sind wiederum als Bohrungen ausgebildete Auslaßöffnungen 17 angebracht, die die Abströmkanäle 16 mit der Atmosphäre verbinden.

Die Dicke a des Rollenmantels 1 ist kleiner 2 mm, damit die Masse des Rollenmantels 1, der zwischen den Stirnwänden 3, 10 frei drehbar ist, möglichst klein ist.

Der Winkel b zwischen einem Verteilerkanal 6 und einem entgegen der Drehrichtung 18 des Rollenmantels 1 vorgeordneten Abströmkanal 16 ist in Fig. 2 gleich dem Winkel c zwischen dem Verteilerkanal 6 und einem in Drehrichtung nachgeordneten Abströmkanal 16. Wenn c ≤ b ist, dann erfolgt bei ansonsten gleichen Strömungsverhältnissen ein Antrieb des Rollenmantels 1 in Drehrichtung 18. Das Antriebsmoment wird vom Fluid also in Richtung des kleineren Winkels ausgeübt. Gleiche Strömungsverhältnisse setzen insbesondere gleiche Zahl und Querschnitte der Zuführöffnungen 12 und der Abströmöffnungen 15 voraus, da deren Querschnitte klein im Verhältnis zum Querschnitt der Verteilerkanäle 6 der Abströmkanäle 16 sind.

Im geschilderten Fall ist also die Summe der in Umfangsrichtung des Rollenmantels 1 auf diesen ausgeübten Kräfte ungleich.

Wenn dagegen kein Antrieb des Rollenmantels 1 erfolgen soll, muß dieser mit der in Umfangsrichtung des Rollenmantels 1 auf diesen ausgeübten Kräfte gleich Null sein. Dies ist bei den geschilderten Randbedingungen nur dann der Fall, wenn gilt c = b.

**Patentansprüche**

1. Rolle zur Unterstützung, Umlenkung oder zum Transport von Materialien, bestehend aus einem feststehenden zylindrischen Kern (7), auf dem sich ein ringzylindrischer Mantel (1) befindet, wobei beide durch einen radialen Lagerspalt (2) beabstandet sind und der Mantel (1) ausschließlich auf einem zwischen dem Mantel (1) und dem Kern (7) im Lagerspalt (2) strömenden Fluid reibungsarm drehbar gelagert ist,
   dadurch gekennzeichnet,
   daß der Kern (7) mit Zuführöffnungen (12) versehen ist, durch die das Fluid in den Lagerspalt (2) einströmt und daß der Kern (7) mit Abströmöffnungen (15) versehen ist, durch die das Fluid aus dem Lagerspalt (2) in den Kern (7) zurückströmt, wobei das Fluid von den Zuführöffnungen (12) zu den Abströmöffnungen (15) vorwiegend in Umfangsrichtung des Rollenmantels (1) strömt.

2. Rolle nach Anspruch 1, dadurch gekennzeichnet, daß der Rollenmantel (1) eine Dicke (a) besitzt, für die gilt:
   a < 2 mm.

3. Rolle nach Anspruch 1 oder 2, dadurch gekennzeichnet, daß das Fluid ein Gas ist.

4. Rolle nach einem der Ansprüche 1 bis 3, dadurch gekennzeichnet, daß die Zuführöffnungen (12) und die Abströmöffnungen (15) derart angeordnet sind, daß die Summe der in Umfangsrichtung des Rollenmantels (1) auf diesen ausgeübten Kräfte gleich Null ist.

5. Rolle nach einem der Ansprüche 1 bis 3, dadurch gekennzeichnet, daß die Zuführöffnungen (12) und die Abströmöffnungen (15) derart angeordnet sind, daß die Summe der in Umfangsrichtung des Rollenmantels (1) auf diesen ausgeübten Kräfte ungleich Null ist.

Fig. 1

Fig 2